# EUROPEAN PATENT SPECIFICATION

(11) **EP 2 670 008 B1**
(45) Date of publication and mention of the grant of the patent: **15.03.2017**
(21) Application number: 11857051.4
(22) Date of filing: 26.01.2011
(51) Int. Cl.: H02B 13/02, H01H 33/66, H01H 31/00, H02B 13/01, H02B 13/035

(54) **VACUUM INSULATION SWITCHGEAR AND METHOD FOR REPLACING MOLD SWITCH**
VAKUUMISOLIERTE SCHALTANLAGE UND VERFAHREN ZUM ERSETZEN EINES UMSPRITZTEN SCHALTERS
APPAREILLAGE DE COMMUTATION À ISOLATION SOUS VIDE ET PROCÉDÉ PERMETTANT DE REMPLACER UN COMMUTATEUR BLINDÉ

(43) Date of publication of application: 04.12.2013
(73) Proprietor: Hitachi Industrial Equipment Systems Co., Ltd., Tokyo 101-0022 (JP)
(72) Inventor: KIKUKAWA, Shuichi, Hitachi-shi Ibaraki 316-8501 (JP); TAKAHASHI, Keiichi, Hitachi-shi Ibaraki 316-8501 (JP); MORITA, Ayumu, Hitachi-shi Ibaraki 316-8501 (JP)
(74) Representative: MERH-IP Matias Erny Reichl Hoffmann Patentanwälte PartG mbB
(86) International application number: PCT/JP2011/051420
(87) International publication number: WO 2012/101766

(56) References cited:
- EP-A1- 2 149 894
- JP-A- 7 308 006
- JP-A- 7 308 006
- JP-A- 2002 152 930
- JP-A- 2008 245 409
- JP-A- 2008 245 409
- JP-A- 2009 027 767
- JP-A- 2010 044 928

## Description

### Technical Field

The present invention relates to a vacuum insulation switchgear and a method for replacing a mold switch and in particular to a vacuum insulation switchgear equipped with a mold switch formed by integrating a vacuum break switch portion and a disconnector with an earthing function by epoxy casting and suitable for use in electric power receiving/transforming facilities and a method for replacing the mold switch.

### Background Art

Electric power receiving/transforming facilities are usually equipped with an enclosed switchboard (hereafter, referred to as switchgear) housing: a vacuum circuit breaker for interrupting load current or fault current; a disconnector and an earthing switch for ensuring an operator' s safety when he/she maintains and inspects a load; detectors for system voltage and system current; a protection relay; and the like.

The insulation method for the switchgear is of great variety. In addition to conventional aerial insulation and gas insulation using SF6 gas, solid insulation, compressed air insulation, and full vacuum insulation have recently come along from the viewpoint of environmental protection. The adoption of these types of insulation methods has accelerated the downsizing of each component of circuit breaker, disconnector, and earthing switch.

Under these circumstances, a vacuum insulation switchgear housing a device formed by integrating the following by epoxy casting in a cabinet has been recently proposed: a vacuum break switch portion having an interrupting function and a similarly aerially insulated disconnector with an earthing function (EDS). (Refer to Patent Literature 1.)

The above-mentioned vacuum insulation switchgear is obtained by integrating a vacuum vessel housing a vacuum break switch portion having an interrupting function and a disconnector with an earthing function (EDS) by epoxy casting and placing the integrated device in a cabinet. Because of its small size, light weight, and high reliability, the vacuum insulation switchgear canmeet the requirement of size and weight reduction for critical facilities, such as power distribution facilities, in urban areas.

With respect to electric power receiving/transforming facilities, users' demands have been diversified. An example will be taken. The type of a load and operating conditions therefor vary depending on its intended use; therefore, the required levels of safety, reliability, operation and maintenance, and future increase in load are taken into account to plan an electric distribution system. In planning an electric distribution system, consideration must also be given to the control of a circuit breaker, a disconnector, an earthing switch, and the like comprising electric power receiving/transforming facilities and the monitoring and measuring of the voltage, current, electric power, and the like of the electric power receiving/transforming facilities.

In this case, it is important to reduce the space of installation of the equipment, such as the circuit breaker, disconnector, earthing switch, and the like, control equipment therefor, and monitoring and measuring equipment therefor. The investment in the installation of these pieces of equipment is thereby reduced.

To meet these demands, especially, to reduce the overall size of a switchgear, it is very important to reduce the size of the relevant switching device unit portion as principal equipment. It is desired to install the switching device unit in a minimum necessary installation space.

Meanwhile, customers demand to shorten the duration of service interruption as much as possible even if a trouble occurs in a mold switch housed in the switching device unit portion during on-site operation. This is done by replacing the mold switch involving the trouble with a new mold switch in as short a time as possible.

In ordinary cases, the replacement of the entire switchgear is the restoration work that can be conducted in the shortest time. In this case, the cost burden of the switchgear for replacement is increased; therefore, customers desire to replace only a critical part involving a trouble to reduce the cost burden as much as possible.

Because of this, it is important to take the following measures: the volume of the mold switch housing portion of the switching device unit portion is reduced as much as possible for the reduction of the size of the switchgear; and should a trouble occur in a mold switch portion, the mold switch is swiftly removed from the switchgear so that it can be replaced with a new mold switch.

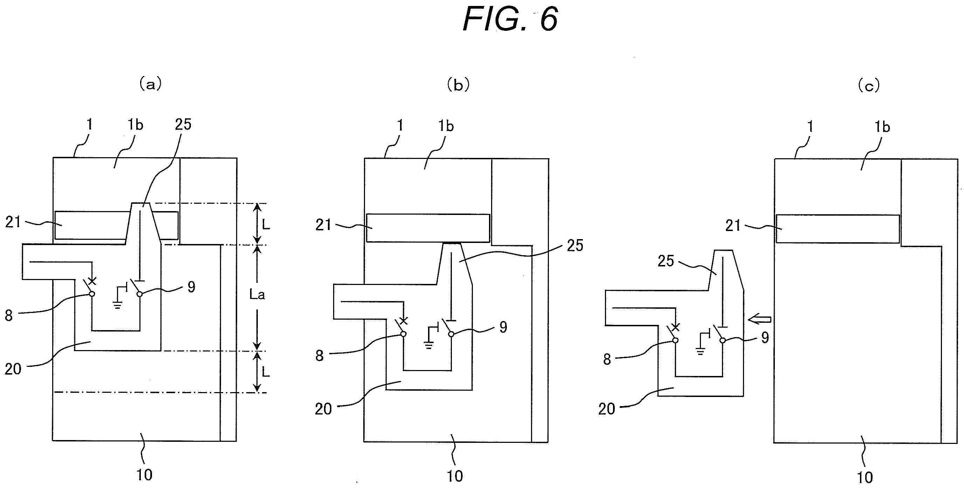

A description will be given to this method for replacing a mold switch with reference to FIG. 6.

As shown in FIG. 6, during operation (FIG. 6(a)), a mold switch 20 obtained by integrally molding the following members by epoxy resin is secured in a cabinet 1 by a mold switch securing member 21: a vacuum break switch 8 having an interrupting function installed in a switching device section 1b; and a three-position disconnecting switch 9 having a disconnection/earthing function. This mold switch securing member 21 is secured on a switching device support member.

If a trouble occurs in a mold switch 20 and an attempt is made to replace it with a new mold switch in this state, a problem will arise. A bus-side bushing 25 of the mold switch 20 is projected from the mold switch 20 in the height direction of the bus-side bushing 25 (dimension L in the drawing). In this state, therefore, the bus-side bushing 25 interferes and it is difficult to take the mold switch 20 out of the switchgear.

To cope with this, usually, a space with the same dimension L as the dimension L in the height direction by which the bus-side bushing 25 of the mold switch 20 is projected upward is ensured at the lower part of the mold switch 20. To replace a mold switch involving a trouble, as shown in FIG. 6(b), the mold switch 20 involving the trouble, removed from the mold switch securing member 21, is moved down to the space with dimension L ensured at the lower part of the mold switch 20. As shown FIG. 6(c), thereafter, the mold switch 20 is pulled out of the area embracing the space ensured at the lower part thereof in the horizontal direction by a lifter or the like and taken out of the switchgear. After the mold switch 20 involving the trouble is taken out of the switchgear, a new mold switch for replacement is installed in the switching device section 1b by procedures reversing the above. The mold switch securing member 21 is secured on the switching device support member and the mold switch securing member 21 is secured in the cabinet 1.

Patent Literature 2 shows a switchgear comprising a vacuum circuit-breaker portion connected to a bus bar via a vacuum or air disconnector portion and to a vacuum or air ground switch portion and an outside mutually-receiving portion. The circuit breaker portion and a disconnector portion, the switching portion and the bus-bar, and the receiving portion are molded with an insulator, having a grounding layer on its surface. The circuit-breaker portion, the disconnector portion and the switch portion have operation mechanisms for linearly driving them individually.

Patent Literature 3 discloses a vacuum insulated switch-gear and its height adjusting method. The switch-gear comprises a metal box in which are arranged: a vacuum valve, an earthing switch, three-phase bus bars, and a cable. The vacuum valve comprises two pairs of switch components. The vacuum chamber of the vacuum valve and the vacuum chamber of the earthing switch are integrally molded with a molded resin, it discloses the pre-amble of claim 1.

### Citation List

### Patent Literature

Patent Literature 1: Japanese Unexamined Patent Application Publication No. 2010-44928
Patent Literature 2: Japanese Patent Application Publication No. 2002-152930
Patent Literature 3: European Patent Application EP 2149894 A1

### Summary of Invention

### Technical Problem

The above-mentioned method for replacing a mold switch poses a problem. It is necessary to ensure beforehand a space with the same dimension L as the dimension L of the bus-side bushing of the mold switch in the height direction at the lower part of the mold switch. As shown in FIG. 6, the length in the height direction of the mold switch with this space taken into account is 2L+La. (La is the dimension of the mold switch in the height direction except the dimension L of the bus-side bushing in the height direction.) This used to interfere with the reduction of the overall size of switchgear.

The invention has been made in consideration of the foregoing. An object of the invention is to provide a vacuum insulation switchgear in which a mold switch can be replaced without increasing the overall size of the switchgear and a method for replacing the mold switch.

### Solution to Problem

To achieve the above object, a vacuum insulation switchgear disclosing the features of claim 1 is presented.

To achieve the above object, the method for replacing a mold switch is the method according to claim 4.

### Advantageous Effects of Invention

The invention brings about both the following effects: the overall size of a switchgear can be reduced; and when a mold switch portion breaks down, only that mold switch can be replaced.

### Brief Description of Drawings

[FIG. 1] FIG. 1 is a side view of an embodiment in which a vacuum insulation switchgear of the invention is applied as a feeder panel, illustrating it in operation in the form of local sectional view.
[FIG. 2] FIG. 2 is a side view of an embodiment in which the vacuum insulation switchgear of the invention shown in FIG. 1 is applied as a feeder panel, illustrating it during replacement of a mold switch in the form of local sectional view.
[FIG. 3] FIG. 3 is a perspective view illustrating a switching device comprising the vacuum insulation switchgear of the invention shown in FIG. 1.
[FIG. 4] FIG. 4 is a plan view illustrating a switching device comprising an embodiment of a vacuum insulation switchgear of the invention.
[FIG. 5] FIG. 5 is a drawing for explaining a method for replacing a mold switch in an embodiment of a vacuum insulation switchgear of the invention.
[FIG. 6] FIG. 6 is a drawing for explaining a method for replacing a mold switch in a conventional vacuum insulation switchgear.

### Description of Embodiments

Hereafter, a description will be given to an embodiment of a vacuum insulation switchgear of the invention with reference to the drawings.

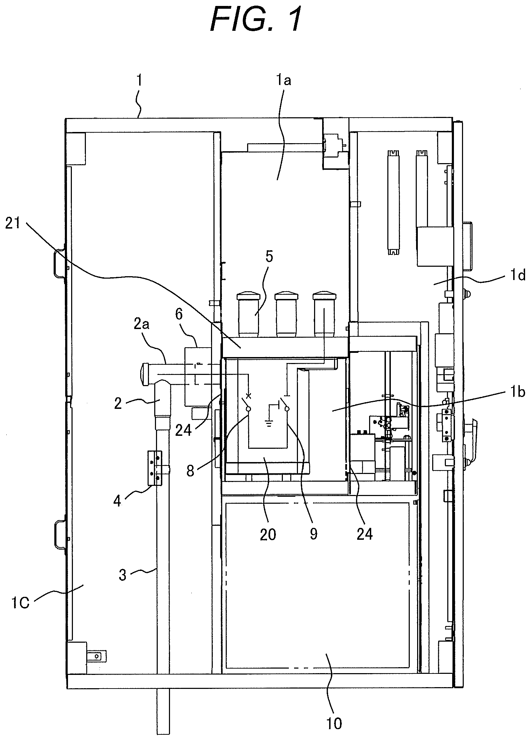

FIG. 1 illustrates an embodiment in which a vacuum insulation switchgear of the invention is applied as a feeder panel. In the drawing, the cabinet 1 of the vacuum insulation switchgear includes a bus section 1a, a switching device section 1b including an operation mechanism portion, a cable section 1c, and a control section 1d each of which is partitioned by a grounded metal plate.

The bus section 1a is formed above the central part of the cabinet 1; the switching device section 1b is formed below the bus section 1a; the cable section 1c is formed on the rear face side (left side of FIG. 1) of the cabinet 1; and the control section 1d is formed on the front face side (right side of FIG. 1) of the cabinet 1.

In the bus section 1a, solid insulated three-phase buses 5 are placed in parallel to the front face of the cabinet 1. The buses 5 are rendered gasless by solid insulation to ensure ease of handling and safety. In the switching device section 1b, a vacuum break switch 8 having an interrupting function, a three-position disconnecting switch 9 having a disconnection/earthing function, and an operation mechanism portion 10 are placed.

The cable section 1c is provided with: a terminal 2a for cable connection connected to a fixed electrode of the vacuum break switch 8 and led into the cable section 1c; a T-shaped cable head 2 rotatably provided at the terminal 2a; a cable 3 connected to the terminal 2a by the T-shaped cable head 2; and a current transformer (CT) 4 provided at the cable 3. In this example, the cable 3 is led from the lower part of the cabinet 1 into the cable section 1c. In the cable section 1c, the terminal 2a for cable connection is provided on the periphery thereof with a current transformer (CT) 6 for system protection.

The control section 1d is placed above the operation mechanism portion 10 on the front face side (right side of FIG. 1) of the cabinet 1. Thus consideration is given to the prevention of increase in the size of the cabinet 1 in the height direction in the place of installation.

In the thus configured vacuum insulation switchgear in this embodiment, the following measure is taken: the above-mentioned vacuum break switch 8 and three-position disconnecting switch 9 are integrally molded by epoxy resin and installed in the switching device section 1b as are supported by the switching device support member 24. With respect to the mold switches 20 installed in the switching device section 1b, the following measure is taken so that they can be easily replaced: each mold switch is removably secured by a fastening means 22 such as a bolt on the mold switch securing member 21 removably connected to the switching device support member 24 by a fastening means such as a bolt. An opening (not shown) that allows a mold switch 20 to be taken out is formed on the switchgear rear face side of a portion of the switching device support member 24 comprising the cabinet 1 where a mold switch 20 is placed. The opening is so configured that the following is implemented: during operation, the opening is closed by a lid (not shown) fastened by a bolt; and when a mold switch 20 is replaced, the bolt is unfastened and the lid is removed so that the mold switch 20 can be pulled out of the opening.

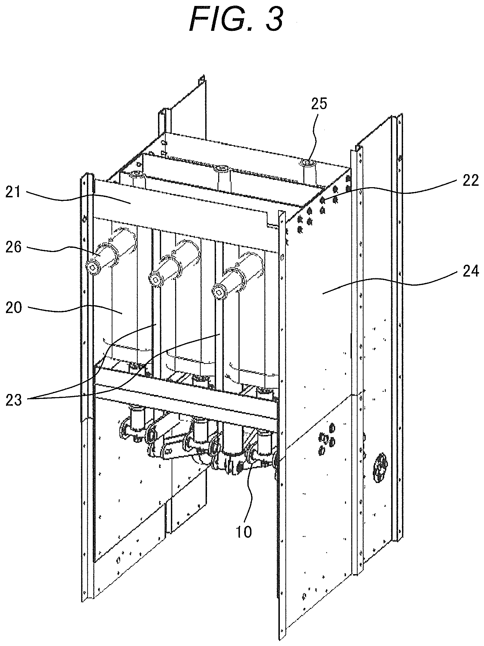

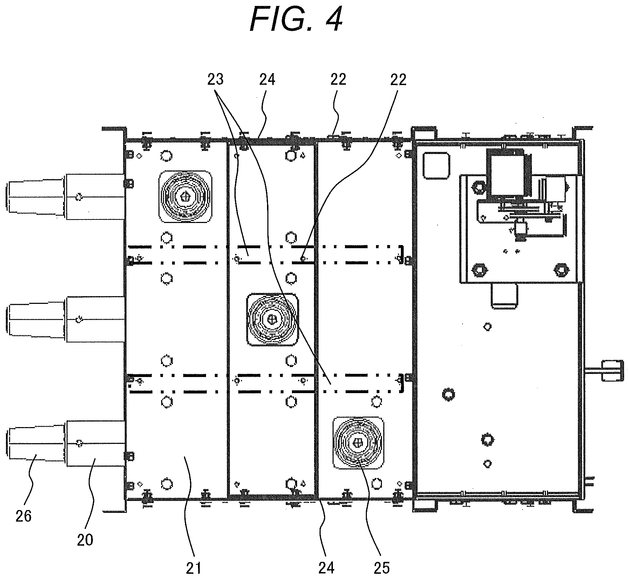

As described above, each mold switch 20 is unitized for size and weight reduction and this facilitates replacing work. In addition, the three unitized mold switches 20 are of phase separation structure as illustrated in FIG. 3 and FIG. 4. They are arranged in three rows orthogonally to the front face of the cabinet 1 and an interphase grounded metal plate 23 is placed between phases to suppress the occurrence of a short circuit accident between phases. The interphase grounded metal plates 23 are fastened to the mold switch securing member 21 by a removable fastening member such as a bolt. In addition, the outer surface of each mold switch 20 is painted with conductive paint and grounded to ensure safety against contact and the like.

With respect to the spacing between the mold switches 20 and the operation mechanism portion 10 placed thereunder, the following measure is conventionally taken: a space with the same dimension L as the dimension L by which the bus-side bushing 25 of the mold switches 20 is projected upward in the height direction is ensured. In this embodiment, the necessity for this measure is obviated and the spacing between each mold switch 20 and the operation mechanism portion 10 is shorter than the dimension L by which the bus-side bushing 25 is projected upward in the height direction.

This makes it possible to take L+La as the length of each mold switch 20 in the height direction and reduce the overall size of the switchgear.

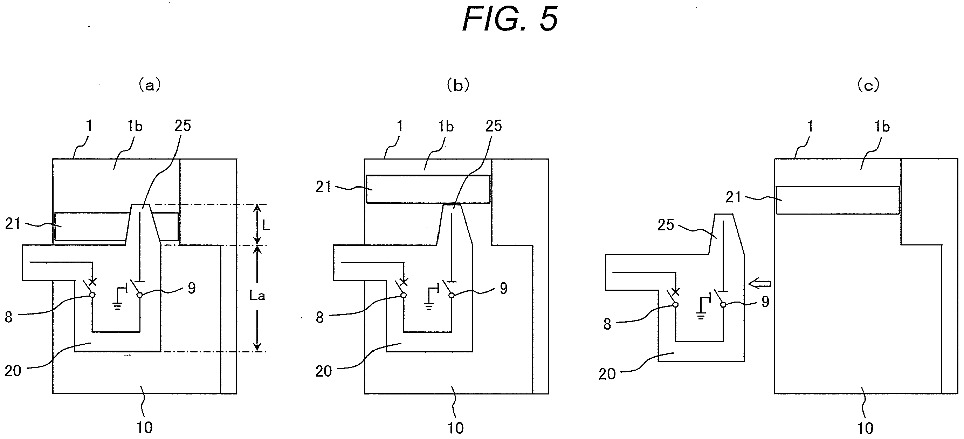

A description will be given to a method for replacing a mold switch 20 with the configuration in this embodiment with reference to FIG. 5.

FIG. 5(a) illustrates the configuration of this embodiment in the operating state. The difference between this configuration and that in FIG. 6(a) illustrating the conventional configuration in the operating state is as follows. In the configuration in FIG. 6(a), a space with the same dimension L as the dimension L by which the bus-side bushing 25 of a mold switch 20 is projected upward in the height direction is ensured. In this embodiment, meanwhile, it is unnecessary to ensure a space with dimension L and the spacing between each mold switch 20 and the operation mechanism portion 10 is shorter than the dimension L by which the bus-side bushing 25 is projected upward in the height direction.

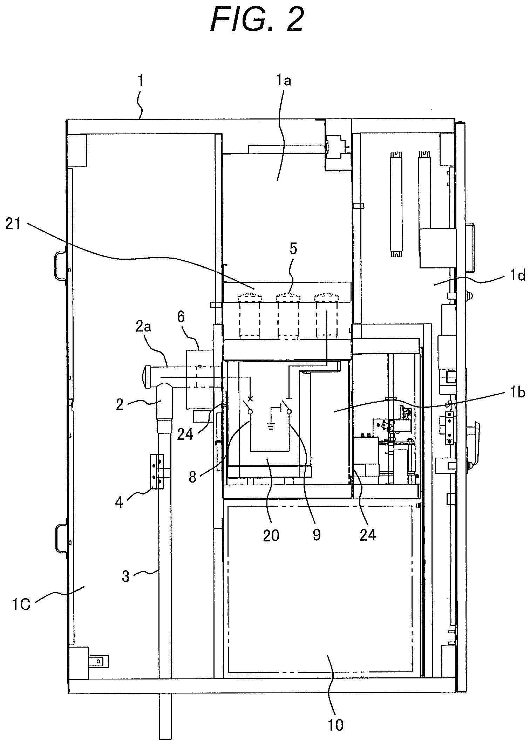

When a trouble occurs in a mold switch 20 in this state and it must be replaced, the following procedure is taken: first, the connection between the bus-side bushing 25 of the mold switch 20 and the bus 5 and the connection between the cable-side bushing 26 and the cable 3 are removed; further, the bolt fastening of the switching device support member 24 and mold switch securing member 21 securing the mold switch 20 is removed; thereafter, the mold switch securing member 21 is pulled upward by an amount equal to or larger than the dimension L by which the bus-side bushing 25 of the mold switch 20 is projected upward in the height direction. FIG. 5(b) illustrates this state. (FIG. 2 also illustrates the same state.)

As shown in FIG. 5(b), the mold switch securing member 21 is pulled up by an amount equal to or larger than the dimension L by which the bus-side bushing 25 of a mold switch 20 is projected upward in the height direction. As a result, a space exists above the mold switch 20 where the bus-side bushing 25 is positioned.

The presence of this space brings the following advantage : even though the bus-side bushing 25 of a mold switch 20 is projected upward by dimension L, there is no obstacle. As shown in FIG. 5(c), a mold switch 20 involving a trouble can be pulled in the horizontal direction out of the opening (not shown) formed in the switching device support member 24 and can be smoothly taken out of the switchgear.

After the mold switch 20 involving the trouble is taken out of the switchgear, a new mold switch for replacement is installed in the switching device section 1b by procedures reversing the above. The mold switch 20 is secured on the switching device support member 24 by the mold switch securing member 21. The bus-side bushing 25 of the mold switch 20 and the bus 5 are connected with each other and the cable-side bushing 26 and the cable 3 are connected with each other. This completes the replacing work.

The adoption of the above-mentioned method for replacing a mold switch in this embodiment brings the following advantage : unlike conventional cases, it is unnecessary to ensure below the mold switches 20 a space with the same dimension L as the dimension L by which the bus-side bushing 25 is projected upward in the height direction. As shown in FIG. 5, the length of each mold switch in the height direction is L+La and the overall size of the switchgear can be accordingly reduced.

As a result, it is possible to meet both of customers' demands: the reduction in the overall size of a switchgear; and the capability to replace only the relevant mold switch if any trouble occurs in the mold switch portion.

In addition to the above-mentioned effect, this embodiment brings about the effect described below. The mold switch securing member 21 for securing mold switches 20 can be separated from the switching device support member 24 and the interphase grounded metal plates 23. Therefore, when these members are removed, the mold switch securing member 21 is reduced in weight and can be easily pulled upward.

### Reference Sings List

- 1: Cabinet,
- 1a: Bus section,
- 1b: Switching device section,
- 1c: Cable section,
- 1d: Control section,
- 2: T-shaped cable head,
- 2a: Terminal,
- 3: Cable,
- 4: Current transformer,
- 5: Bus,
- 6: Current transformer for system protection
- 8: Vacuum break switch,
- 9: Three-position disconnecting switch,
- 10: Operation mechanism portion,
- 20: Mold switch,
- 21: Mold switch securing member,
- 22: Fastening means,
- 23: Interphase grounded metal plate,
- 24: Switching device support member,
- 25: Bus-side bushing,
- 26: Cable-side bushing

## Claims

1. A vacuum insulation switchgear comprising:
a cabinet (1) including
a switching device section (1b) with
an operation mechanism portion (10) placed thereunder,
a bus section (1 a) in which a bus (5) is placed,
a cable section (1 c) in which a cable (3) is placed, and
a control section (1 d), each of the sections being partitioned by a grounded metal plate;
a mold switch (20) installed in the switching device section (1b) and obtained by integrally molding
a vacuum break switch (8) having an interrupting function and
a three-position disconnecting switch (9) having a disconnection/earthing function, the switches being operated by the operation mechanism portion (10);
a mold switch securing member (21) securing the mold switch in the cabinet (1); and
a switching device support member (24) supporting and securing the mold switch securing member (21);
in which vacuum insulation switchgear, the bus section (1 a) is formed above the central part of the cabinet (1),
the switching device section (1 b) is formed below the bus section (1 a),
the cable section (1 c) is formed on the rear face side of the cabinet (1), and
the control section (1 d) is formed on the front face side of the cabinet (1) and
a bus-side bushing (25) projected in the height direction of the mold switch (20) and the bus (5) are connected with each other and
a cable-side bushing (26) projected in the horizontal direction of the mold switch (20) and the cable (3) are connected with each other;
wherein the spacing between the mold switch (20) and the operation mechanism portion (10) placed thereunder is shorter than a length (L) of the bus-side bushing (25) projected in the height direction of the mold switch (20);
**characterized in that** the mold switch securing member (21) is removably connected to the switching device support member (24) by a removable fastening member (22), and that
the mold switch securing member (21) is configured such that it can be pulled upward by an amount equal to or larger than the length (L) of the bus-side bushing (25) projected in the height direction of the mold switch (20).

2. The vacuum insulation switchgear according to Claim 1, **characterized in that**:
the three mold switches (20) are arranged in three rows with an interphase metal plate (23) placed in-between and the mold switch securing member (21) is connected with the interphase grounded metal plate (23) by a removable fastening member (22).

3. The vacuum insulation switchgear according to Claim 1 or 2,
**characterized in that:** the fastening member (22) is a bolt.

4. A method for replacing a mold switch (20) obtained by integrally molding
a vacuum break switch (8) having an interrupting function and
a three-position disconnecting switch (9) having a disconnection/earthing function,
the switches (8, 9) being installed in a switching device section (1b) partitioned by a grounded metal plate and operated by an operation mechanism portion (10) placed thereunder, in which mold switch (20),
a bus-side bushing (25) projected in the height direction and a bus (5) are connected with each other and a cable-side bushing (26) projected in the horizontal direction and a cable (3) are connected with each other, the method being **characterized in that:**
when the mold switch (20) is replaced, the connection between the bus-side bushing (25) and the bus (5) and the connection between the cable-side bushing (26) and the cable (3) are removed,
the fastening of a mold switch securing member (21) securing the mold switch (20) in a cabinet (1) and the fastening of a switching device support member (24) supporting and securing the mold switch securing member (21) are removed,
thereafter, the mold switch securing member (21) is pulled upward by equal to or more than the length (L) of the bus-side bushing (25) projected in the height direction of the mold switch (20),
subsequently, the mold switch (20) is pulled out in the horizontal direction and taken out of the switchgear, and
then a mold switch (20) for replacement is installed in the switching device section (1 b) by procedures reversing the above.

5. The method for replacing a mold switch (20) according to Claim 4,
**characterized in that:**
the fastening between the mold switch (20) and the mold switch securing member (21) and
the fastening between the mold switch securing member (21) and the switching device support member (24) are implemented by a connectable/removable bolt.

## Patentansprüche

1. Vakuumisolations-Schaltanlage, die Folgendes umfasst:
einen Schrank (1), der Folgendes enthält:
einen Schaltvorrichtungsabschnitt (1b) mit einem Betriebsmechanismusabschnitt (10), der darunter angebracht ist,
einen Sammelleitungsabschnitt (1a), in dem eine Sammelleitung (5) angebracht ist,
einen Kabelabschnitt (1c), in dem ein Kabel (3) angebracht ist, und
einen Steuerabschnitt (1d), wobei jeder der Abschnitte durch eine geerdete Metallplatte unterteilt ist;
einen Formschalter (20), der in dem Schaltvorrichtungsabschnitt (1b) angebracht ist und durch einteiliges Formen
eines Vakuumtrennschalters (8), der eine Unterbrechungsfunktion besitzt, und
eines Trennschalters (9) mit drei Positionen, der eine Trennfunktion/Erdungsfunktion besitzt, erhalten wird, wobei die Schalter durch den Betriebsmechanismusabschnitt (10) betrieben werden;
ein Formschalter-Befestigungselement (21), das den Formschalter in dem Schrank (1) befestigt; und
ein Schaltvorrichtungs-Tragelement (24), das das Formschalter-Befestigungselement (21) trägt und befestigt;
wobei der Sammelleitungsabschnitt (1a) in der Vakuumisolations-Schaltanlage oberhalb des zentralen Abschnitts des Schranks (1) gebildet ist,
der Schaltvorrichtungsabschnitt (1b) unterhalb des Sammelleitungsabschnitts (1a) gebildet ist,
der Kabelabschnitt (1c) auf der Rückseite des Schranks (1) gebildet ist und
der Steuerabschnitt (1d) auf der Vorderseite des Schranks (1) gebildet ist und
eine sammelleitungsseitige Buchse (25), die in die Höhenrichtung des Formschalters (20) vorsteht, und die Sammelleitung (5) miteinander verbunden sind und
eine kabelseitige Buchse (26), die in die horizontale Richtung des Formschalters (20) vorsteht, und das Kabel (3) miteinander verbunden sind;
wobei der Abstand zwischen dem Formschalter (20) und dem Betriebsmechanismusabschnitt (10), der darunter angebracht ist, kürzer als eine Länge (L) der sammelleitungsseitigen Buchse (25), die in die Höhenrichtung des Formschalters (20) hervorsteht, ist;
**dadurch gekennzeichnet, dass** das Formschalter-Befestigungselement (21) mit dem Schaltvorrichtungs-Tragelement (24) durch ein abnehmbares Befestigungselement (22) abnehmbar verbunden ist und dass
das Formschalter-Befestigungselement (21) so konfiguriert ist, dass es um einen Betrag aufwärts gezogen werden kann, der gleich oder größer als die Länge (L) der sammelleitungsseitigen Buchse (25) ist, die in die Höhenrichtung des Formschalters (20) hervorsteht.

2. Vakuumisolations-Schaltanlage nach Anspruch 1, **dadurch gekennzeichnet, dass**
die drei Formschalter (20) in drei Reihen mit einer Zwischenphasen-Metallplatte (23), die dazwischen angebracht ist, angeordnet sind und das Formschalter-Befestigungselement (21) durch ein abnehmbares Befestigungselement (22) mit der geerdeten Zwischenphasen-Metallplatte (23) verbunden ist.

3. Vakuumisolations-Schaltanlage nach Anspruch 1 oder 2,
**dadurch gekennzeichnet, dass** das Befestigungselement (22) ein Bolzen ist.

4. Verfahren zum Ersetzen eines Formschalters (20), der durch einteiliges Formen
eines Vakuumtrennschalters (8), der eine Unterbrechungsfunktion besitzt, und
eines Trennschalters (9) mit drei Positionen, der eine Trennfunktion/Erdungsfunktion besitzt, erhalten wird,
wobei die Schalter (8, 9) in einem Schaltvorrichtungsabschnitt (1b) angebracht sind, der durch eine geerdete Metallplatte unterteilt ist und durch einen Betriebsmechanismusabschnitt (10), der darunter angebracht ist, betrieben wird,
wobei in dem Formschalter (20)
eine sammelleitungsseitige Buchse (25), die in Höhenrichtung vorsteht, und eine Sammelleitung (5) miteinander verbunden sind und eine kabelseitige Buchse (26), die in horizontaler Richtung vorsteht, und ein Kabel (3) miteinander verbunden sind, wobei das Verfahren **dadurch gekennzeichnet ist, dass**
dann, wenn der Formschalter (20) ersetzt wird, die Verbindung zwischen der sammelleitungsseitigen Buchse (25) und der Sammelleitung (5) und die Verbindung zwischen der kabelseitigen Buchse (26) und dem Kabel (3) entfernt werden,
die Befestigung eines Formschalter-Befestigungselements (21), das den Formschalter (20) in einem Schrank (1) befestigt, und die Befestigung eines Schaltvorrichtungs-Tragelements (24), die das Formschalter-Befestigungselement (21) trägt und befestigt, entfernt werden,
danach das Formschalter-Befestigungselement (21) um einen Betrag, der gleich oder größer ist als die Länge (L) der sammelleitungsseitigen Buchse (25), die in die Höhenrichtung des Formschalters (20) vorsteht, hochgezogen wird,
anschließend der Formschalter (20) in horizontaler Richtung ausgezogen wird und aus der Schaltanlage genommen wird und
dann ein Formschalter (20) als Ersatz in dem Schaltvorrichtungsabschnitt (1b) durch Vorgänge, die das Obige rückgängig machen, angebracht wird.

5. Verfahren zum Ersetzen eines Formschalters (20) nach Anspruch 4,
**dadurch gekennzeichnet, dass**
die Befestigung zwischen dem Formschalter (20) und dem Formschalter-Befestigungselement (21) und die Befestigung zwischen dem Formschalter-Befestigungselement (21) und dem Schaltvorrichtungs-Tragelement (24) durch einen verbindbaren/abnehmbaren Bolzen implementiert werden.

## Revendications

1. Appareillage de commutation à isolation sous vide comprenant :
un coffret (1) incluant
une section formant dispositif de commutation (1b) avec
une portion de mécanisme d'actionnement (10) placée au-dessous,
une section de bus (1a) dans laquelle est placé un bus (5),
une section de câble (1c) dans laquelle est placé un câble (3), et
une section de commande (1d), chacune des sections étant cloisonnée par une plaque de métal mise à la masse ;
un commutateur moulé (20) installé dans la section formant dispositif de commutation (1b) et obtenu par moulage intégral
un commutateur de rupture sous vide (8) ayant une fonction d'interruption et
un commutateur de déconnexion à trois positions (9) ayant une fonction de déconnexion/mise à la terre, les commutateurs étant actionnés par la portion de mécanisme d'actionnement (10) ;
un élément de fixation pour commutateur moulé (21) qui fixe le commutateur moulé dans le coffret (1) ; et
un élément de support pour dispositif de commutation (24) qui supporte et qui fixe l'élément de fixation pour commutateur moulé (21) ;
dans l'appareil de commutation à isolation sous vide, la section de bus (1a) est formée au-dessus de la partie centrale du coffret (1),
la section formant dispositif de commutation (1b) est formée au-dessous de la section de bus (1a),
la section de câble (1c) est formée sur le côté de la face arrière du coffret (1), et
la section de commande (1d) est formée sur le côté de la face avant du coffret (1), et
une douille côté bus (25) en projection dans la direction en hauteur du commutateur moulé (20) et le câble (3) sont connectés l'un avec l'autre ;
dans lequel l'espacement entre le commutateur moulé (20) et la portion formant mécanisme d'actionnement (10) placée au-dessous est plus court qu'une longueur (L) de la douille côté bus (25) en projection dans la direction en hauteur du commutateur moulé (20) ;
**caractérisé en ce que** l'élément de fixation pour commutateur moulé (21) est connecté de façon amovible à l'élément de support pour dispositif de commutation (24) par un élément de fixation amovible (22), et **en ce que**
l'élément de fixation pour commutateur moulé (21) est configuré de telle façon qu'il peut être tiré vers le haut d'une distance égale ou supérieure à la longueur (L) de la douille côté bus (25) qui se projette dans la direction en hauteur du commutateur moulé (20).

2. Appareillage de commutation à isolation sous vide selon la revendication 1, **caractérisé en ce que** :
les trois commutateurs moulés (20) sont agencés en trois rangées avec une plaque de métal interphase (23) placée entre eux, et l'élément de fixation pour commutateur moulé (21) est connecté avec la plaque de métal interphase (23) mise à la masse, par un élément de fixation amovible (22).

3. Appareillage de commutation à isolation sous vide selon la revendication 1 ou 2, **caractérisé en ce que** l'élément de fixation (22) est un boulon.

4. Procédé pour remplacer un commutateur moulé (20) obtenu en moulant intégralement un commutateur de rupture sous vide (8) ayant une fonction d'interruption et
un commutateur de déconnexion à trois positions (9) ayant une fonction de déconnexion et de mise à la terre,
les commutateurs (8, 9) étant installés dans une section formant dispositif de commutation (1b) cloisonnée par une plaque de métal mise à la masse et actionnée par une portion formant mécanisme d'actionnement (10) placée au-dessous, et dans le commutateur moulé (20) :
une douille côté bus (25) en projection dans la direction en hauteur et un bus (5) sont connectés l'un à l'autre, et une douille côté câble (26) en projection dans la direction horizontale et un câble (3) sont connectés l'un avec l'autre, le procédé étant **caractérisé en ce que** :
quand le commutateur moulé (20) est remplacé, la connexion entre la douille côté bus (25) et le bus (5) et la connexion entre la douille côté câble (26) et le câble (3) sont supprimées,
la fixation d'un élément de fixation pour commutateur moulé (21) qui fixe le commutateur moulé (20) dans un coffret (1) et la fixation d'un élément de support pour dispositif de commutation (24) qui supporte et qui fixe l'élément de fixation pour commutateur moulé (21) sont supprimées,
ensuite, l'élément de fixation pour commutateur moulé (21) est tiré vers le haut d'une distance égale ou supérieure à la longueur (L) de la douille côté bus (25) en projection dans la direction en hauteur du commutateur moulé (20),
ensuite, le commutateur moulé (20) est tiré dans la direction horizontale et sorti de l'appareillage de commutation, et
ensuite un commutateur moulé (20) de remplacement est installé dans la section formant dispositif de commutation (1b) par des procédures inverses à celles ci-dessus.

5. Procédé pour remplacer un commutateur moulé (20) selon la revendication 4,
**caractérisé en ce que** :
la fixation entre le commutateur moulé (20) et l'élément de fixation pour commutateur moulé (21) et la fixation entre l'élément de fixation pour commutateur moulé (21) et l'élément de support pour dispositif de commutation (24) sont réalisées par un boulon susceptible d'être connecté/amovible.
